(19) **Europäisches Patentamt**
**European Patent Office**
**Office européen des brevets**

(11) **EP 4 502 709 A1**

(12) **EUROPEAN PATENT APPLICATION**
published in accordance with Art. 153(4) EPC

(43) Date of publication:
**05.02.2025 Bulletin 2025/06**

(21) Application number: **23814702.9**

(22) Date of filing: **14.03.2023**

(51) International Patent Classification (IPC):
*G02B 27/09* (2006.01)   *H01Q 19/06* (2006.01)
*H04B 10/118* (2013.01)

(52) Cooperative Patent Classification (CPC):
**G02B 27/0927; G02B 17/0808; G02B 27/09;**
**H01Q 19/06; H04B 10/118;** G02B 5/001;
G02B 27/0983

(86) International application number:
**PCT/CN2023/081339**

(87) International publication number:
**WO 2023/231504 (07.12.2023 Gazette 2023/49)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **31.05.2022   CN 202210616022**

(71) Applicant: **Huawei Technologies Co., Ltd.**
**Shenzhen, Guangdong 518129 (CN)**

(72) Inventors:
• **LIAO, Wenzhe**
  **Shenzhen, Guangdong 518129 (CN)**
• **YU, Ying**
  **Shenzhen, Guangdong 518129 (CN)**
• **FANG, Chu**
  **Shenzhen, Guangdong 518129 (CN)**
• **WU, Yuping**
  **Shenzhen, Guangdong 518129 (CN)**

(74) Representative: **MERH-IP Matias Erny Reichl**
**Hoffmann**
**Patentanwälte PartG mbB**
**Paul-Heyse-Straße 29**
**80336 München (DE)**

(54) **OPTICAL ATP ANTENNA AND OPTICAL SIGNAL PROCESSING METHOD**

(57)   Embodiments of this application disclose an optical acquisition, tracking, pointing ATP antenna, to implement distribution of an annular Gaussian beam by using an axicon, thereby reducing costs of the optical ATP antenna. The optical ATP antenna includes an input light source module, an axicon, and an optical imaging module, and central axes of the input light source module, the axicon, and the optical imaging module coincide. The axicon is configured to: shape a first Gaussian beam emitted by the input light source module into a first annular Gaussian beam, and transmit the first annular Gaussian beam to the optical imaging module. The optical imaging module is configured to: expand the first annular Gaussian beam into a second annular Gaussian beam, and transmit the second annular Gaussian beam to a lower optical path, where a diameter of the second annular Gaussian beam is greater than a diameter of the first annular Gaussian beam.

FIG. 3

EP 4 502 709 A1

## Description

This application claims priority to Chinese Patent Application No. CN202210616022.5, filed with the China National Intellectual Property Administration on May 31, 2022 and entitled "OPTICAL ATP ANTENNA AND OPTICAL SIGNAL PROCESSING METHOD", which is incorporated herein by reference in its entirety.

## TECHNICAL FIELD

Embodiments of this application relate to the field of optical signal processing technologies, and in particular, to an optical ATP antenna and an optical signal processing method.

## BACKGROUND

In a space optical communication system, an optical acquisition, tracking, pointing (Acquisition, Tracking, Pointing, ATP) antenna is used to transmit and receive a space optical signal. A front optical path of the optical ATP antenna is a Cassegrain telescope structure including a primary mirror and a secondary mirror, to reduce an incident beam from a relatively large diameter at an entrance pupil, and then transfer a reduced beam to a rear optical path.

To reduce an energy loss of the optical ATP antenna with the coaxial Cassegrain telescope structure caused by a reflecting mirror with a central opening, an amplitude-type Fresnel zone plate is used in a new Fresnel optical ATP antenna to shape a collimated Gaussian beam. The zone plate is a grating including a group of alternating transparent and opaque communication rings. In this solution, a focusing characteristic of the Fresnel zone plate is utilized to replace a conventional lens, and a diffraction characteristic is utilized to generate a beam with a dark center. In this way, the energy loss caused by the reflecting mirror with the central opening is avoided.

The Fresnel optical ATP antenna splits a continuous beam into discontinuous beams, resulting in an energy loss of an optical signal. This is not conducive to long-distance beam communication. In addition, the Fresnel optical ATP antenna has a high requirement on a process, causing high costs of the Fresnel optical ATP antenna.

## SUMMARY

This application provides an optical ATP antenna and an optical signal processing method, to implement distribution of an annular Gaussian beam by using an axicon, thereby reducing costs of the optical ATP antenna.

A first aspect of embodiments of this application provides an optical acquisition, tracking, pointing ATP antenna. The optical ATP antenna includes an input light source module, an axicon, and an optical imaging module. The axicon is configured to: shape a first Gaussian beam emitted by the input light source module into a first annular Gaussian beam, and transmit the first annular Gaussian beam to the optical imaging module. The optical imaging module is configured to: expand the first annular Gaussian beam into a second annular Gaussian beam, and transmit the second annular Gaussian beam to a lower optical path, where a diameter of the second annular Gaussian beam is greater than a diameter of the first annular Gaussian beam.

In this possible implementation, a lens solution is used in the optical ATP antenna, to implement annular Gaussian beam effect without introducing a diffraction element. A structure is simple and convenient, and costs are low.

In a possible implementation of the first aspect, central axes of the input light source module, the axicon, and the optical imaging module coincide.

In a possible implementation of the first aspect, the optical imaging module includes a lens unit and a reflecting mirror group. The reflecting mirror group includes a primary reflecting mirror and a secondary reflecting mirror, and the primary reflecting mirror has an opening. The lens unit is configured to: expand the first annular Gaussian beam into the second annular Gaussian beam, and then transmit the second annular Gaussian beam to the secondary reflecting mirror, where the diameter of the second annular Gaussian beam is equal to a clear aperture of the primary reflecting mirror, and an opening diameter of the second annular Gaussian beam is equal to a clear aperture of the secondary reflecting mirror. The primary reflecting mirror is configured to transmit, to the lower optical path, the second annular Gaussian beam transmitted by the secondary reflecting mirror.

In a possible implementation of the first aspect, the opening of the primary reflecting mirror is located at a center of the primary reflecting mirror.

In a possible implementation of the first aspect, a first surface of the axicon is a concave surface, and a second surface of the axicon is a convex surface. The first surface is a surface that is of the axicon and that is opposite to the input light source module, and the second surface is a surface that is of the axicon and that is opposite to the input light source module.

In this possible implementation, different structures of the used axicon are utilized, the first surface of the axicon is a concave surface, and the second surface of the axicon is a convex axicon surface, to implement effect of an annular Gaussian beam. In addition, the axicon directly emits an annular Gaussian beam, and no additional ocular lens system needs to be introduced to shape inverse Gaussian distribution into Gaussian distribution.

In a possible implementation of the first aspect, an angle of the axicon is determined based on a refractive index and a length of the axicon and a preset height of a beam deviating from an optical axis.

In a possible implementation of the first aspect, a first surface of the axicon is a concave surface, and a second surface of the axicon is a flat surface. The axicon is configured to: shape a Gaussian beam emitted by the input light source module into a first annular inverse Gaussian beam, and transmit the first annular inverse Gaussian beam to the lens unit. The lens unit is further configured to invert the first annular inverse Gaussian beam into the first annular Gaussian beam.

In a possible implementation of the first aspect, the lens unit includes a first lens and a second lens, and the first lens and the second lens are configured to invert the first annular inverse Gaussian beam into the first annular Gaussian beam.

In this possible implementation, for the axicon with the first surface being a concave surface and the second surface being a flat surface, an emergent beam is an annular inverse Gaussian beam, and the first lens and the second lens may invert the annular inverse Gaussian beam, to obtain an annular Gaussian beam.

In a possible implementation of the first aspect, the axicon includes a first axicon and a second axicon, where a first surface of the first axicon is a concave surface, and a second surface of the first axicon is a flat surface; and a first surface of the second axicon is a flat surface, and a second surface of the second axicon is a convex surface.

In a possible implementation of the first aspect, both a first surface and a second surface of the axicon are concave surfaces.

In a possible implementation of the first aspect, the input light source module includes a light source unit and a collimator. The light source unit is configured to generate a beam, and the collimator is configured to shape the beam into the first Gaussian beam.

In a possible implementation of the first aspect, the optical ATP antenna further includes a receiving module. The optical imaging module is further configured to: receive a flat-top beam, shape the flat-top beam into a first annular flat-top beam, and transmit the first annular flat-top beam to the axicon. The axicon is further configured to: reduce the first annular flat-top beam into a second annular flat-top beam, and transmit the second annular flat-top beam to the receiving module. The receiving module is configured to receive the second annular flat-top beam.

In a possible implementation of the first aspect, the optical ATP antenna further includes a receiving module. The optical imaging module is further configured to: receive a third annular Gaussian beam, reduce the third annular Gaussian beam into a fourth annular Gaussian beam, and transmit the fourth annular Gaussian beam to the axicon. The axicon is further configured to: shape the fourth annular Gaussian beam into a second Gaussian beam, and transmit the second Gaussian beam to the receiving module. The receiving module is configured to receive the second Gaussian beam.

A second aspect of embodiments of this application provides an optical signal processing method. An optical ATP antenna includes an input light source module, an axicon, and an optical imaging module. The method includes: shaping, by using the axicon, a first Gaussian beam emitted by the input light source module into a first annular Gaussian beam, and transmitting the first annular Gaussian beam to the optical imaging module; and expanding the first annular Gaussian beam into a second annular Gaussian beam by using the optical imaging module, and transmitting the second annular Gaussian beam to a lower optical path, where a diameter of the second annular Gaussian beam is greater than a diameter of the first annular Gaussian beam.

In a possible implementation of the second aspect, central axes of the input light source module, the axicon, and the optical imaging module coincide.

In a possible implementation of the second aspect, the optical imaging module includes a lens unit and a reflecting mirror group. The reflecting mirror group includes a primary reflecting mirror and a secondary reflecting mirror, and the primary reflecting mirror has an opening. The method further includes: expanding the first annular Gaussian beam into the second annular Gaussian beam by using the lens unit, and then transmitting the second annular Gaussian beam to the secondary reflecting mirror, where the diameter of the second annular Gaussian beam is equal to a clear aperture of the primary reflecting mirror, and an opening diameter of the second annular Gaussian beam is equal to a clear aperture of the secondary reflecting mirror; and transmitting, to the lower optical path by using the primary reflecting mirror, the second annular Gaussian beam transmitted by the secondary reflecting mirror.

In a possible implementation of the second aspect, the opening of the primary reflecting mirror is located at a center of the primary reflecting mirror.

In a possible implementation of the second aspect, a first surface of the axicon is a concave surface, and a second surface of the axicon is a flat surface. The method further includes: shaping, by using the axicon, a Gaussian beam emitted by the input light source module into a first annular inverse Gaussian beam, and transmitting the first annular inverse Gaussian beam to the lens unit; and inverting the first annular inverse Gaussian beam into the first annular Gaussian beam by using the lens unit.

In a possible implementation of the second aspect, the lens unit includes a first lens and a second lens, and the inverting the first annular inverse Gaussian beam into the first annular Gaussian beam by using the lens unit includes: inverting the first annular inverse Gaussian beam into the first annular Gaussian beam by using the first lens and the second lens.

In a possible implementation of the second aspect, the input light source module includes a light source unit and a collimator. The method further includes: generating a beam by using the light source unit; and shaping the beam into the first Gaussian beam by using the collimator.

In a possible implementation of the second aspect, the optical ATP antenna further includes a receiving module. The method further includes: receiving a flat-top beam by using the optical imaging module, shaping the flat-top beam into a first annular flat-top beam, and transmitting the first annular flat-top beam to the axicon; reducing the first annular flat-top beam into a second annular flat-top beam by using the axicon, and transmitting the second annular flat-top beam to the receiving module; and receiving the second annular flat-top beam by using the receiving module.

In a possible implementation of the second aspect, the optical ATP antenna further includes a receiving module. The method further includes: The optical imaging module is further configured to: receive a third annular Gaussian beam, reduce the third annular Gaussian beam into a fourth annular Gaussian beam, and transmit the fourth annular Gaussian beam to the axicon. The axicon is further configured to: shape the fourth annular Gaussian beam into a second Gaussian beam, and transmit the second Gaussian beam to the receiving module. The receiving module is configured to receive the second Gaussian beam.

A third aspect of embodiments of this application provides an optical communication satellite device. The optical communication satellite device includes the optical ATP antenna in any one of the first aspect or the possible implementations of the first aspect, an optical amplifier module, and a controller. The optical ATP antenna may be configured to perform the method in any one of the second aspect or the possible implementations of the second aspect.

A fourth aspect of embodiments of this application provides a space optical communication system. The space optical communication system includes the optical communication satellite device in the third aspect.

It may be learned from the foregoing technical solutions that embodiments of this application have the following advantages.

In embodiments of this application, a lens solution is used in the optical ATP antenna, to implement annular Gaussian beam effect without introducing a diffraction element. A structure is simple and convenient, and costs are low.

**BRIEF DESCRIPTION OF DRAWINGS**

FIG. 1 is a diagram of a structure of a Fresnel optical ATP antenna;
FIG. 2a is a diagram of a scenario of an optical communication satellite device according to an embodiment of this application;
FIG. 2b is a diagram of a structure of an optical communication satellite device according to an embodiment of this application;

FIG. 3 is a diagram of a structure of an optical ATP antenna according to an embodiment of this application;
FIG. 4 is a diagram of a scenario of an axicon according to an embodiment of this application;
FIG. 5 is a diagram of another structure of an axicon according to an embodiment of this application;
FIG. 6a is a diagram of another structure of an optical ATP antenna according to an embodiment of this application;
FIG. 6b is a diagram of another structure of an axicon according to an embodiment of this application;
FIG. 6c is a diagram of another structure of an axicon according to an embodiment of this application;
FIG. 7a is a diagram of another structure of an optical ATP antenna according to an embodiment of this application;
FIG. 7b is a diagram of another structure of an axicon according to an embodiment of this application;
FIG. 8 is a diagram of another structure of an optical ATP antenna according to an embodiment of this application;

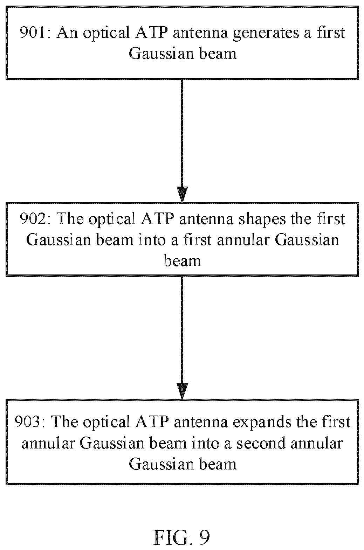

FIG. 9 is a schematic flowchart of an optical signal processing method according to an embodiment of this application;
FIG. 10 is a diagram of a structure of an optical communication satellite device according to an embodiment of this application; and
FIG. 11 is a diagram of a structure of a space optical communication system according to an embodiment of this application.

**DESCRIPTION OF EMBODIMENTS**

Embodiments of this application provide an optical ATP antenna and an optical signal processing method, to implement distribution of an annular Gaussian beam by using an axicon, thereby reducing costs of the optical ATP antenna.

The following describes embodiments of this application with reference to accompanying drawings. It is clear that the described embodiments are merely some but not all of embodiments of this application. A person of ordinary skill in the art may learn that, with development of technologies and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances, so that embodiments described herein can be implemented in other orders than the order illustrated or described herein. In addition, the terms "include", "have" and any variants thereof are intended to cover a non-exclusive inclusion. For example, a process, method, system, product, or device that includes a list of steps or units is not necessarily limited to those steps or units that are expressly listed, but may include other steps or units that are not expressly listed or that are inherent to such a process, method, product, or device.

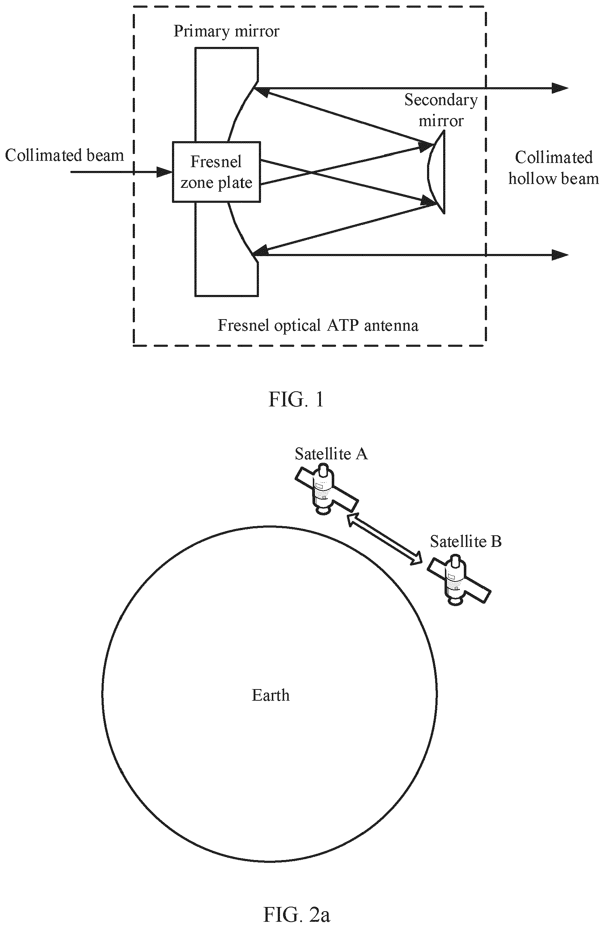

As shown in FIG. 1, in a space optical communication system, an optical acquisition, tracking, pointing (acquisition, tracking, pointing, ATP) ATP antenna is used to transmit and receive a space optical signal. A front optical path of the optical ATP antenna is a Cassegrain telescope structure including a primary mirror and a secondary mirror, to reduce an incident beam from a relatively large diameter at an entrance pupil, and then transfer a reduced beam to a rear optical path. To reduce an energy loss of the optical ATP antenna with the coaxial Cassegrain telescope structure caused by a reflecting mirror with a central opening, an amplitude-type Fresnel zone plate is used in a new Fresnel optical ATP antenna to shape a collimated Gaussian beam. The zone plate is a grating including a group of alternating transparent and opaque communication rings. In this solution, a focusing characteristic of the Fresnel zone plate is utilized to replace a conventional lens, and a diffraction characteristic is utilized to generate a beam with a dark center. In this way, the energy loss caused by the reflecting mirror with the central opening is avoided.

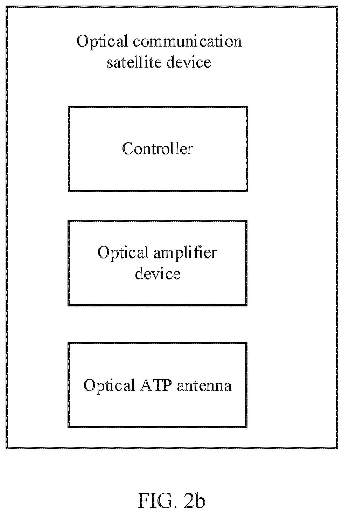

As shown in FIG. 2a and FIG. 2b, an embodiment of this application provides an optical communication satellite device. The optical communication satellite device includes a controller, an optical amplifier device, and an optical ATP antenna. The controller is configured to control the optical amplifier device and the optical ATP antenna to process an optical signal. The optical amplifier device includes a light source and an optical amplifier module, and the optical amplifier module is configured to implement an optical communication function. The optical ATP antenna is used to perform beam shaping, transmission, and receiving, and the optical ATP antenna includes an input light source module, an axicon, and an optical imaging module. The axicon is configured to: shape a first Gaussian beam emitted by the input light source module into a first annular Gaussian beam, and transmit the first annular Gaussian beam to the optical imaging module. The optical imaging module is configured to: expand the first annular Gaussian beam into a second annular Gaussian beam, and transmit the second annular Gaussian beam to a lower optical path, where a diameter of the second annular Gaussian beam is greater than a diameter of the first annular Gaussian beam.

Based on the foregoing optical communication satellite device, the following describes an optical ATP antenna in an embodiment of this application.

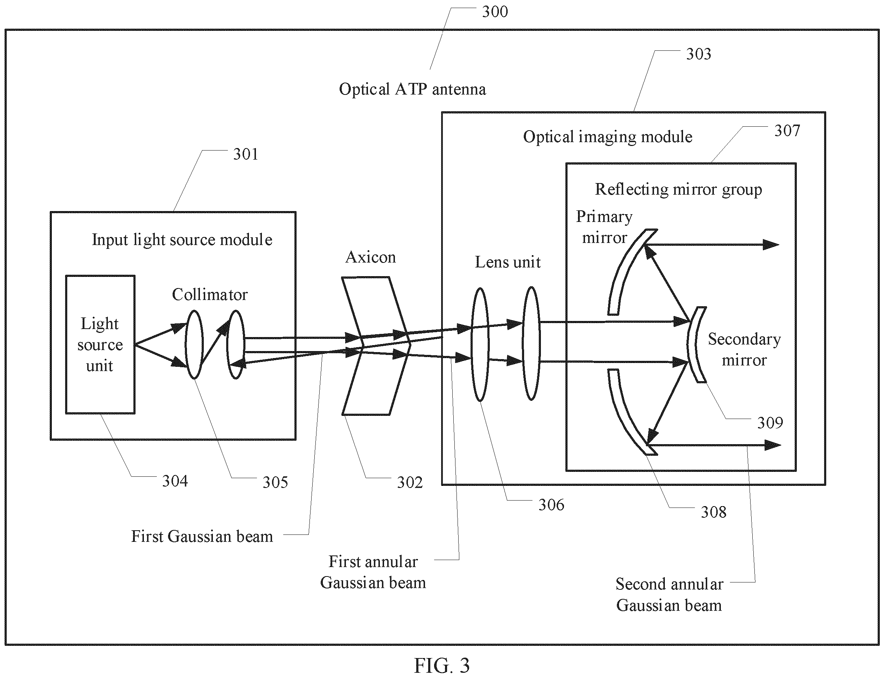

As shown in FIG. 3, the optical ATP antenna 300 in this embodiment of this application includes:

an input light source module 301, where the input light source module 301 is configured to: generate a collimated first Gaussian beam, and send the collimated first Gaussian beam to an axicon, and a diameter of the first Gaussian beam is a first diameter. A diameter of a beam is a diameter of a circle presented in a cross section of the beam in a direction perpendicular to a propagation direction of the beam.

In a possible implementation, the input light source module 301 includes a light source unit 304 and a collimator 305. The light source unit 304 is configured to generate a Gaussian beam. The collimator 305 is configured to collimate the Gaussian beam into the first Gaussian beam, where the first Gaussian beam is a collimated Gaussian beam with a specific diameter.

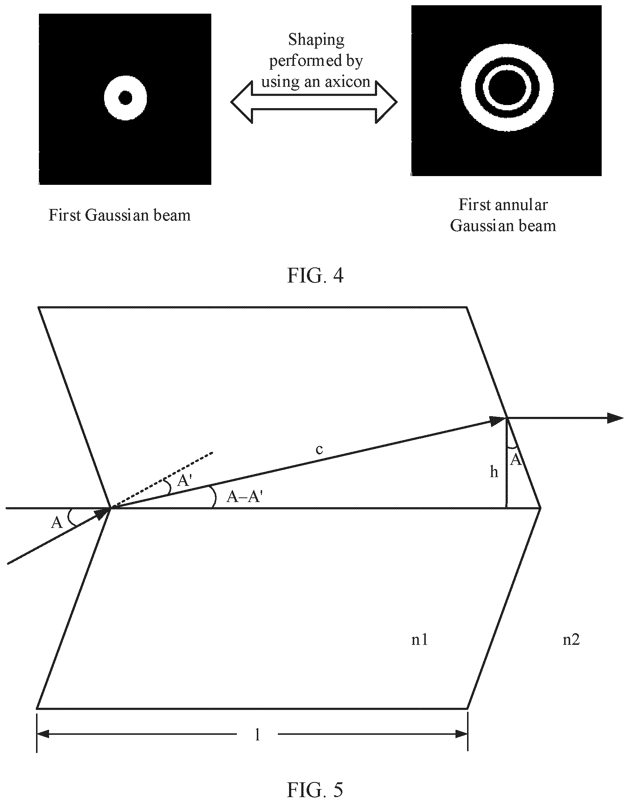

An axicon 302 is included. The axicon is configured to: shape the first Gaussian beam emitted by the input light source module 301 into a first annular Gaussian beam, and transmit the first annular Gaussian beam to an optical imaging module. As shown in FIG. 4, the first annular Gaussian beam is an annular Gaussian beam with a central opening, and a ratio of a size of the central opening to a diameter of the beam is known.

In embodiments of this application, a lens solution is used in the optical ATP antenna, to implement annular Gaussian beam effect without introducing a diffraction element. A structure is simple and convenient, and costs are low.

In a possible implementation, as shown in FIG. 3, a first surface (namely, a left-side end surface) that is of the axicon and that receives an incident beam is a concave surface, and a second surface (namely, a right-side end surface) that is of the axicon and that emits a beam is a convex surface. The first surface is a surface that is of the axicon and that is opposite to the input light source module, and the second surface is a surface that is of the axicon and that is opposite to the input light source module. In this possible implementation, a beam propagation direction of the axicon is shown from left to right. In FIG. 3, the left-side end face, namely, the first surface, of the axicon is an incident surface of the axicon, and the right-side end face, namely, the second surface, of the axicon is an exit surface of the axicon. The left-side beam incident surface, namely, the first surface, of the axicon is a concave surface, and the right-side beam exit surface, namely, the second surface, of the axicon is a convex surface.

In this possible implementation, different structures of the used axicon are utilized, the left-side end face of the axicon is a concave surface, and the right-side end face of the axicon is a convex axicon surface, to implement effect of an annular Gaussian beam. In addition, the axicon directly emits an annular Gaussian beam, and no additional ocular lens system needs to be introduced to shape inverse Gaussian distribution into Gaussian distribution.

As shown in FIG. 5, a design of the axicon is determined by an input angle of a beam. It is assumed that an incident angle of a beam is defined as $\angle$ A, an included angle between the left-side end face of a corner cube and an outer side of the axicon is $\angle$ B, an included

angle between the right-side end face of the corner cube and the outer side of the axicon is $\angle C$, a length of the two axicon surfaces is l, a height at which the beam is separated from an optical axis center of the lens after passing through the axicon is h, an environmental refractive index outside the corner cube is n1 (the refractive index is 1 when the outside is vacuum or air), and a refractive index of the axicon is n2 (a refractive index of an internal lens material is represented by n2). With reference to a triangle relationship in FIG. 5 and the law of refraction, the following calculation formulas may be obtained:

$$\angle A + \angle B = 90°;$$

$$n * \sin A' = \sin A;$$

$$h = \sin(A - A') * \sin(90° - A) * l \div \sin(90° + A');$$

and

$$l = h * \sin(90° + A') \div [\sin(A - A') * \sin(90° - A)].$$

It may be learned from the foregoing calculation formulas that a corresponding angle of the axicon may be designed based on the given material refractive index n2, the length 1 of the lens, and the expected height h of the beam deviating from the optical axis. The length 1 of the lens and the axicon angle of the axicon may be designed in coordination with each other.

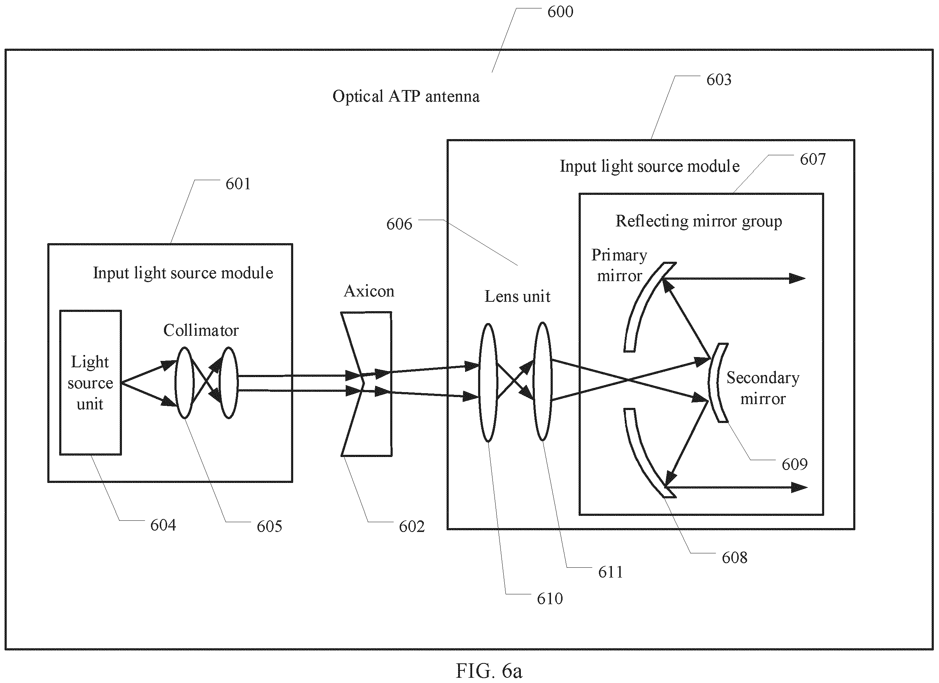

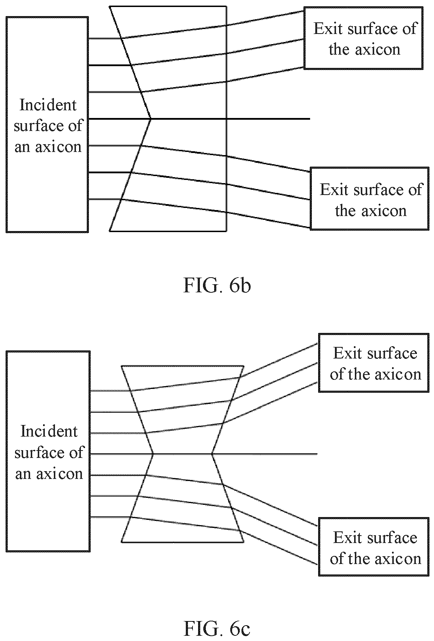

In a possible implementation, as shown in FIG. 6a and FIG. 6b, a left-side end face of the axicon is a concave surface, and a right-side end face of the axicon is a flat surface. In this possible implementation, a beam propagation direction of the axicon is shown from left to right. In FIG. 3, the left-side end face of the axicon is an incident surface of the axicon, and the right-side end face of the axicon is an exit surface of the axicon. The left-side end face of the axicon is a concave surface, and the right-side end face of the axicon is a flat surface.

In a possible implementation, as shown in FIG. 6c, both a left-side end face, namely, an incident surface, and a right-side end face, namely, an exit surface, of the axicon may be concave surfaces.

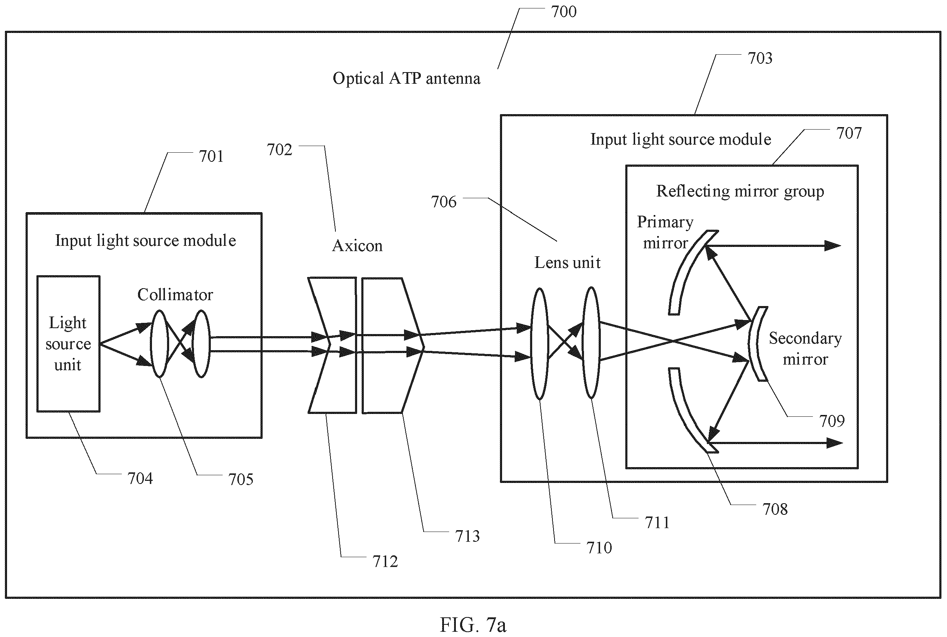

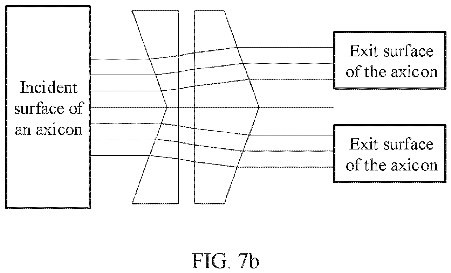

In a possible implementation, as shown in FIG. 7a and FIG. 7b, a beam propagation direction of an axicon is shown from left to right. The axicon 702 includes a first axicon 712 and a second axicon 713, where a left-side end face, namely, an incident surface, of the first axicon is a concave surface, and a right-side end face, namely, an exit surface, of the first axicon is a flat surface; and a left-side end face of the second axicon is a flat surface, and a right-side end face of the second axicon is a convex surface. The first axicon and the second axicon may be separated by a specific gap, or may be cemented by using a transparent material. This is not specifically limited herein.

In this embodiment of this application, an angle of the axicon may be determined based on a refractive index and a length of the axicon and a preset height of a beam deviating from an optical axis. The angle of the axicon includes an angle of the left-side end face of the axicon, an angle of the right-side end face of the axicon, or an angle of a left-side end face and an angle of a right-side end face of a lens that forms the axicon. This is not specifically limited herein.

An optical imaging module 303 is included. The optical imaging module is configured to: expand the first annular Gaussian beam into a second annular Gaussian beam, and transmit the second annular Gaussian beam to a lower optical path, where a diameter of the second annular Gaussian beam is greater than a diameter of the first annular Gaussian beam.

The optical imaging module 303 includes a lens unit 306 and a reflecting mirror group 307. The reflecting mirror group 307 includes a primary reflecting mirror 308, namely, a primary mirror and a secondary reflecting mirror 309, namely, a secondary mirror, and there is an opening in a center of the primary reflecting mirror 308. A size of the central opening of the primary reflecting mirror 308 is equal to a size of a clear aperture of the secondary reflecting mirror 309. That is, the size of the opening of the primary reflecting mirror 308 does not affect receiving, by the secondary reflecting mirror 309, of an optical signal transmitted by the lens unit 306. The secondary reflecting mirror 309 is configured to receive the second annular Gaussian beam transmitted by the lens unit 306. The second annular Gaussian beam may pass through the opening of the primary reflecting mirror 308, and then be transmitted to the secondary reflecting mirror 309. The size of the opening of the primary reflecting mirror 308 needs to meet a requirement that transmission of the second annular Gaussian beam is not blocked, so that the second annular Gaussian beam can be transmitted to the secondary reflecting mirror 309. Therefore, the size of the opening of the primary reflecting mirror 308 needs to be equal to a size of the clear aperture of the secondary reflecting mirror 309.

In this embodiment of this application, the diameter of the second annular Gaussian beam matches a clear aperture of the primary reflecting mirror 308, and the size of the opening of the primary reflecting mirror 308 needs to be equal to the clear aperture of the secondary reflecting mirror 309. Specifically, a size of an outer loop of the second annular Gaussian beam may be equal to the clear aperture of the primary reflecting mirror 308, that is, the diameter of the opening of the primary reflecting mirror 308, a size of an inner loop of the second annular Gaussian beam is equal to the clear aperture of the secondary reflecting mirror, and the size of the central opening of the primary reflecting mirror 308 is equal to the clear aperture of the secondary reflecting mirror 309. This is not specifically limited herein.

The lens unit 306 is configured to: receive the first annular Gaussian beam transmitted by the axicon 302, expand the first annular Gaussian beam into the second annular Gaussian beam, and transmit the second annular Gaussian beam to the secondary reflecting mirror, where the diameter of the second annular Gaussian beam is equal to the clear aperture at the center of the primary reflecting mirror, and an opening diameter of the second annular Gaussian beam is equal to the clear aperture of the secondary reflecting mirror. That is, the diameter of the second annular Gaussian beam is less than or equal to the opening of the primary reflecting mirror, to transmit the second annular Gaussian beam to the secondary reflecting mirror 309.

In a possible implementation, the lens unit 306 may include a plurality of lenses. For example, as shown in FIG. 6a and FIG. 6b, when a left-side end face, namely, an incident surface, of the axicon 602 is a concave surface, and a right-side end face, namely, an exit surface, of the axicon 602 is a flat surface, the lens unit 606 may include a first lens 610 and a second lens 611. The axicon 602 of this type emits a first annular inverse Gaussian beam. That is, a beam emitted by the axicon of this type is an annular inverse Gaussian beam. Therefore, the first annular inverse Gaussian beam needs to be inverted. The first lens 610 and the second lens 611 are configured to invert the first annular inverse Gaussian beam into the first annular Gaussian beam.

In this possible implementation, the first lens 610 and the second lens 611 may be a combination of a negative lens and a positive lens, or may be a positive lens group, or may be a positive lens group or a negative lens group of a doublet lens. This is not specifically limited herein.

The secondary reflecting mirror 309 is configured to: receive the second annular Gaussian beam transmitted by the lens unit 306, and transmit the second annular Gaussian beam to the primary reflecting mirror 308.

The primary reflecting mirror 308 has the opening, and the primary reflecting mirror 308 is configured to: receive the second annular Gaussian beam transmitted by the secondary reflecting mirror 309, and transmit, to the lower optical path, the second annular Gaussian beam transmitted by the secondary reflecting mirror.

In this embodiment of this application, the opening of the primary reflecting mirror 308 may be located in the center of the primary reflecting mirror, or may not be located in the center of the primary reflecting mirror when beam transmission is met. This is not specifically limited herein.

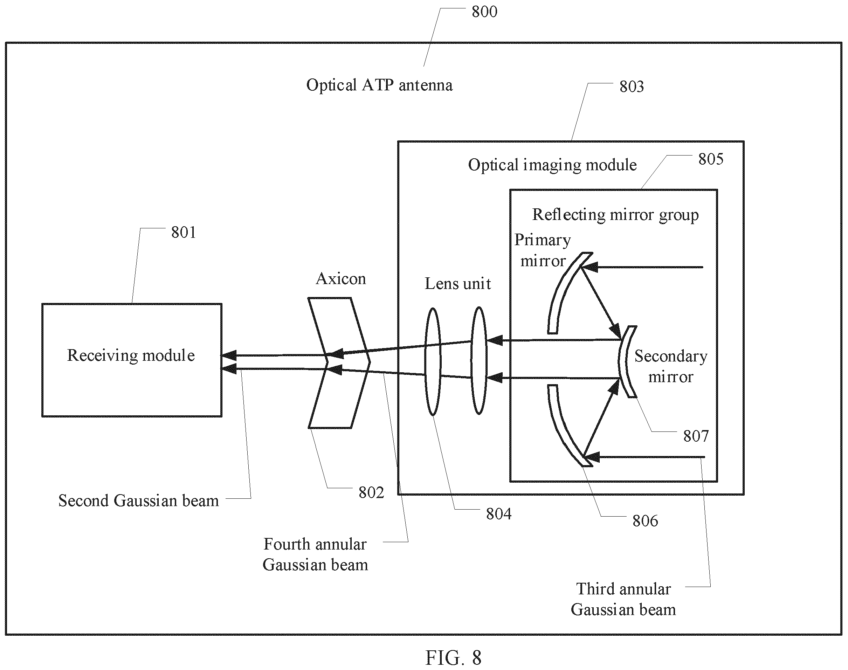

In a possible implementation, the optical ATP antenna may be further configured to process a received beam. Specifically, as shown in FIG. 8, the optical ATP antenna further includes a receiving module 801. In this possible implementation, the optical imaging module 803 is configured to: receive a third annular Gaussian beam transmitted from the outside, reduce the third annular Gaussian beam into a fourth annular Gaussian beam, and transmit the fourth annular Gaussian beam to the axicon 802. The axicon 802 is configured to: receive the fourth annular Gaussian beam transmitted by the optical imaging module 803, shape the fourth annular Gaussian beam into a second Gaussian beam, and then transmit the second Gaussian beam to the receiving module 801. The receiving module 801 is configured to receive the second Gaussian beam transmitted by the axicon 802. In this possible implementation, the optical ATP antenna may further process a received annular Gaussian beam.

In a possible implementation, the beam received by the optical ATP antenna may alternatively be a flat-top beam. Specifically, as shown in FIG. 8, the optical ATP antenna further includes a receiving module 801. In this possible implementation, the optical imaging module 803 is configured to: receive a flat-top beam transmitted from the outside, reduce the flat-top beam into a first annular flat-top beam, and transmit the first annular flat-top beam to the axicon 802. The axicon 802 is configured to: receive the first annular flat-top beam transmitted by the optical imaging module 803, reduce the first annular flat-top beam into a second annular flat-top beam, and then transmit the second annular flat-top beam to the receiving module 801. The receiving module 801 is configured to receive the second annular flat-top beam transmitted by the axicon 802.

In this possible implementation, the axicon 802 of the optical ATP antenna may be the axicon in any one of the embodiments shown in FIG. 3 to FIG. 7b. The optical imaging module 803 and the axicon 802 of the optical ATP antenna have the same functions as the optical imaging module and the axicon in any embodiment shown in FIG. 3 to FIG. 7b, and an optical path direction is opposite. In this possible implementation, the right-side end face, namely, the second surface, of the axicon is an incident surface, and the left-side end face, namely, the first surface, is an exit surface. Details are not described herein again.

In this embodiment of this application, central axes of the input light source module, the axicon, and the optical imaging module may coincide, or may not coincide when beam transmission is met. This is not specifically limited herein.

The following describes an optical signal processing method in an embodiment of this application. The method is applied to an optical ATP antenna. The optical ATP antenna includes an input light source module, an axicon, and an optical imaging module. The method includes the following steps.

901: The optical ATP antenna generates a first Gaussian beam.

The input light source module of the optical ATP antenna includes a light source unit and a collimator. The optical ATP antenna generates a beam by using the light source unit, and then the optical ATP antenna shapes the beam into the first Gaussian beam by using the collimator.

902: The optical ATP antenna shapes the first Gaussian beam into first annular Gaussian beam.

The optical ATP antenna shapes, by using the axicon, the first Gaussian beam emitted by the input light source module into the first annular Gaussian beam, and transmits the first annular Gaussian beam to the optical imaging module.

903: The optical ATP antenna expands the first annular Gaussian beam into a second annular Gaussian beam.

The optical ATP antenna expands the first annular Gaussian beam into the second annular Gaussian beam by using the optical imaging module, and transmits the second annular Gaussian beam to a lower optical path, where a diameter of the second annular Gaussian beam is greater than a diameter of the first annular Gaussian beam.

In a possible implementation, the optical imaging module includes a lens unit and a reflecting mirror group. The reflecting mirror group includes a primary reflecting mirror and a secondary reflecting mirror, there is an opening in a center of the primary reflecting mirror, and that the optical ATP antenna expands the first annular Gaussian beam into a second annular Gaussian beam further includes: expanding, by using the lens unit, the first annular Gaussian beam into the second annular Gaussian beam, and then transmitting the second annular Gaussian beam to the secondary reflecting mirror, where the diameter of the second annular Gaussian beam is equal to a clear aperture at the center of the primary reflecting mirror, and an opening diameter of the second annular Gaussian beam is equal to a clear aperture of the secondary reflecting mirror. The primary reflecting mirror transmits, to the lower optical path, the second annular Gaussian beam transmitted by the secondary reflecting mirror.

In this embodiment of this application, the opening of the primary reflecting mirror may be located in the center of the primary reflecting mirror, or may not be located in the center of the primary reflecting mirror when beam transmission is met. This is not specifically limited herein.

In this embodiment of this application, central axes of the input light source module, the axicon, and the optical imaging module may coincide, or may not coincide when beam transmission is met. This is not specifically limited herein.

In a possible implementation, a left-side end face of the axicon is a concave surface, a right-side end face of the axicon is a flat surface, the lens unit includes a first lens and a second lens, and that the optical ATP antenna expands the first annular Gaussian beam into a second annular Gaussian beam further includes: shaping, by using the axicon, a Gaussian beam emitted by the input light source module into a first annular inverse Gaussian beam, and transmitting the first annular inverse Gaussian beam to the lens unit; and inverting the first annular inverse Gaussian beam into the first annular Gaussian beam by using the first lens and the second lens.

In a possible implementation, the optical ATP antenna further includes a receiving module. The optical ATP antenna further includes the receiving module. The method further includes: receiving a flat-top beam by using the optical imaging module, shaping the flat-top beam into a first annular flat-top beam, and transmitting the first annular flat-top beam to the axicon; reducing the first annular flat-top beam into a second annular flat-top beam by using the axicon, and transmitting the second annular flat-top beam to the receiving module; and receiving the second annular flat-top beam by using the receiving module.

In a possible implementation, the optical ATP antenna further includes a receiving module. The method further includes: The optical imaging module is further configured to: receive a third annular Gaussian beam, reduce the third annular Gaussian beam into a fourth annular Gaussian beam, and transmit the fourth annular Gaussian beam to the axicon. The axicon is further configured to: shape the fourth annular Gaussian beam into a second Gaussian beam, and transmit the second Gaussian beam to the receiving module. The receiving module is configured to receive the second Gaussian beam.

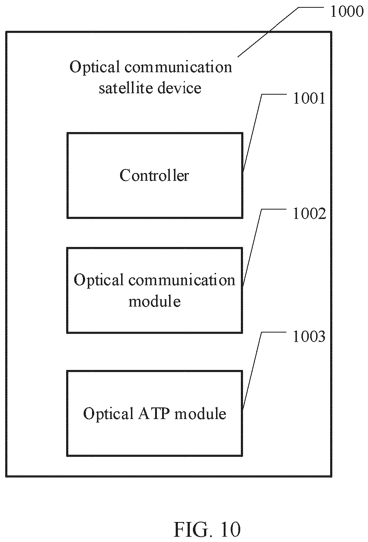

As shown in FIG. 10, an embodiment of this application provides an optical communication satellite device 1000. The optical communication satellite device 1000 includes a controller 1001, an optical communication module 1002, and an optical ATP antenna 1003. The optical ATP antenna 1003 may be the optical ATP antenna in any embodiment in FIG. 3 to FIG. 8.

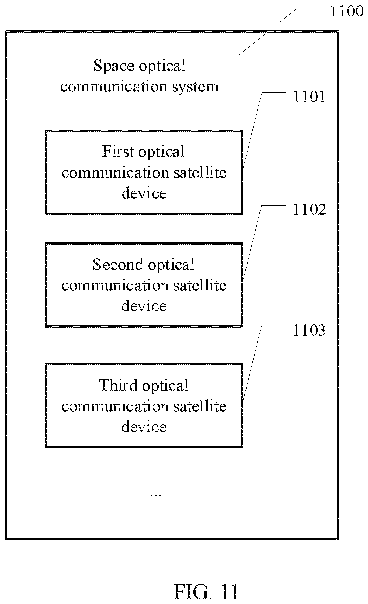

As shown in FIG. 11, an embodiment of this application provides a space optical communication system 1100. The space optical communication system 1100 includes a plurality of optical communication satellite devices such as a first optical communication satellite device 1101, a second optical communication satellite device 1102, and a third optical communication satellite device 1103. The plurality of optical communication satellite devices may be the optical communication satellite devices shown in FIG. 11.

It may be clearly understood by a person skilled in the art that, for the purpose of convenient and brief description, for detailed working processes of the foregoing system, apparatus, and unit, reference may be made to corresponding processes in the foregoing method embodiments. Details are not described herein.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1. An optical acquisition, tracking, pointing ATP antenna, wherein the optical ATP antenna comprises:

    an input light source module, an axicon, and an optical imaging module, wherein
    the axicon is configured to: shape a first Gaussian beam emitted by the input light source module into a first annular Gaussian beam, and transmit the first annular Gaussian beam to the optical imaging module; and
    the optical imaging module is configured to: expand the first annular Gaussian beam into a second annular Gaussian beam, and transmit the second annular Gaussian beam to a lower optical path, wherein a diameter of the second annular Gaussian beam is greater than a diameter of the first annular Gaussian beam.

2. The optical ATP antenna according to claim 1, wherein the optical imaging module comprises a lens unit and a reflecting mirror group, the reflecting mirror group comprises a primary reflecting mirror and a secondary reflecting mirror, and the primary reflecting mirror has an opening;

    the lens unit is configured to: expand the first annular Gaussian beam into the second annular Gaussian beam, and then transmit the second annular Gaussian beam to the secondary reflecting mirror, wherein the diameter of the second annular Gaussian beam is equal to a Gaussian clear aperture of the primary reflecting mirror, and an opening diameter of the second annular Gaussian beam is equal to a clear aperture of the secondary reflecting mirror; and
    the primary reflecting mirror is configured to transmit, to the lower optical path, the second annular Gaussian beam transmitted by the secondary reflecting mirror.

3. The optical ATP antenna according to claim 2, wherein a first surface of the axicon is a concave surface, a second surface of the axicon is a convex surface, the first surface is a surface that is of the axicon and that is opposite to the input light source module, and the second surface is a surface that is of the axicon and that is opposite to the input light source module.

4. The optical ATP antenna according to claim 3, wherein an angle of the axicon is determined based on a refractive index and a length of the axicon and a preset height of a beam deviating from an optical axis.

5. The optical ATP antenna according to claim 2, wherein a first surface of the axicon is a concave surface, and a second surface of the axicon is a flat surface;

    the axicon is configured to: shape a Gaussian beam emitted by the input light source module into a first annular inverse Gaussian beam, and transmit the first annular inverse Gaussian beam to the lens unit; and
    the lens unit is further configured to invert the first annular inverse Gaussian beam into the first annular Gaussian beam.

6. The optical ATP antenna according to claim 2, wherein the axicon comprises a first axicon and a second axicon, wherein a first surface of the first axicon is a concave surface, and a second surface of the first axicon is a flat surface; and a first surface of the second axicon is a flat surface, and a second surface of the second axicon is a convex surface.

7. The optical ATP antenna according to claim 2, wherein both a first surface and a second surface of the axicon are concave surfaces.

8. The optical ATP antenna according to any one of claims 1 to 7, wherein the input light source module comprises a light source unit and a collimator;

> the light source unit is configured to generate a beam; and
> the collimator is configured to shape the beam into the first Gaussian beam.

9. The optical ATP antenna according to claim 8, wherein the optical ATP antenna further comprises a receiving module;

> the optical imaging module is further configured to: receive a flat-top beam, shape the flat-top beam into a first annular flat-top beam, and transmit the first annular flat-top beam to the axicon;
> the axicon is further configured to: reduce the first annular flat-top beam into a second annular flat-top beam, and transmit the second annular flat-top beam to the receiving module; and
> the receiving module is configured to receive the second annular flat-top beam.

10. The optical ATP antenna according to claim 8, wherein the optical ATP antenna further comprises a receiving module;

> the optical imaging module is further configured to: receive a third annular Gaussian beam, reduce the third annular Gaussian beam into a fourth annular Gaussian beam, and transmit the fourth annular Gaussian beam to the axicon;
> the axicon is further configured to: shape the fourth annular Gaussian beam into a second Gaussian beam, and transmit the second Gaussian beam to the receiving module; and
> the receiving module is configured to receive the second Gaussian beam.

11. An optical signal processing method, wherein an optical ATP antenna comprises an input light source module, an axicon, and an optical imaging module, and the method comprises:

> shaping, by using the axicon, a first Gaussian beam emitted by the input light source module into a first annular Gaussian beam, and transmitting the first annular Gaussian beam to the optical imaging module; and
> expanding the first annular Gaussian beam into a second annular Gaussian beam by using the optical imaging module, and transmitting the second annular Gaussian beam to a lower optical path, wherein a diameter of the second annular Gaussian beam is greater than a diameter of the first annular Gaussian beam.

12. The method according to claim 11, wherein the optical imaging module comprises a lens unit and a reflecting mirror group, the reflecting mirror group comprises a primary reflecting mirror and a secondary reflecting mirror, the primary reflecting mirror has an opening, and the method further comprises:

> expanding the first annular Gaussian beam into the second annular Gaussian beam by using the lens unit, and then transmitting the second annular Gaussian beam to the secondary reflecting mirror, wherein the diameter of the second annular Gaussian beam is equal to a clear aperture of the primary reflecting mirror, and an opening diameter of the second annular Gaussian beam is equal to a clear aperture of the secondary reflecting mirror; and
> transmitting, to the lower optical path by using the primary reflecting mirror, the second annular Gaussian beam transmitted by the secondary reflecting mirror.

13. The method according to claim 12, wherein a first surface of the axicon is a concave surface, a second surface of the axicon is a flat surface, and the method further comprises:

> shaping, by using the axicon, a Gaussian beam emitted by the input light source module into a first annular inverse Gaussian beam, and transmitting the first annular inverse Gaussian beam to the lens unit; and
> inverting the first annular inverse Gaussian beam into the first annular Gaussian beam by using the lens unit.

14. The method according to any one of claims 11 to 13, wherein the input light source module comprises a light source unit and a collimator, and the method further comprises:

> generating a beam by using the light source unit; and
> shaping the beam into the first Gaussian beam by using the collimator.

15. The method according to claim 14, wherein the optical ATP antenna further comprises a receiving module, and the method further comprises:

> receiving a flat-top beam by using the optical imaging module, shaping the flat-top beam into a first annular flat-top beam, and transmitting the first annular flat-top beam to the axicon;
reducing the first annular flat-top beam into a second annular flat-top beam by using the axicon, and transmitting the second annular flat-top beam to the receiving module; and receiving the second annular flat-top beam by using the receiving module.

16. The method according to claim 14, wherein the optical ATP antenna further comprises a receiving module, and the method further comprises:

the optical imaging module is further configured to: receive a third annular Gaussian beam, reduce the third annular Gaussian beam into a fourth annular Gaussian beam, and transmit the fourth annular Gaussian beam to the axicon;
the axicon is further configured to: shape the fourth annular Gaussian beam into a second Gaussian beam, and transmit the second Gaussian beam to the receiving module; and
the receiving module is configured to receive the second Gaussian beam.

17. An optical communication satellite device, wherein the optical communication satellite device comprises the optical ATP antenna according to any one of claims 1 to 10, an optical amplifier module, and a controller, and the optical ATP antenna may be configured to perform the method according to any one of claims 11 to 16.

18. A space optical communication system, wherein the space optical communication system comprises a plurality of optical communication satellite devices according to claim 17.

Primary mirror

Secondary mirror

Collimated beam

Fresnel zone plate

Collimated hollow beam

Fresnel optical ATP antenna

FIG. 1

Satellite A

Satellite B

Earth

FIG. 2a

Optical communication
satellite device

Controller

Optical amplifier
device

Optical ATP antenna

FIG. 2b

FIG. 3

First Gaussian beam

Shaping performed by using an axicon

First annular Gaussian beam

FIG. 4

FIG. 5

FIG. 6a

FIG. 6b

FIG. 6c

FIG. 7a

FIG. 7b

FIG. 8

901: An optical ATP antenna generates a first Gaussian beam

902: The optical ATP antenna shapes the first Gaussian beam into a first annular Gaussian beam

903: The optical ATP antenna expands the first annular Gaussian beam into a second annular Gaussian beam

FIG. 9

1000

Optical communication
satellite device

1001

Controller

1002

Optical communication
module

1003

Optical ATP module

FIG. 10

1100

Space optical
communication system

1101

First optical
communication satellite
device

1102

Second optical
communication satellite
device

1103

Third optical
communication satellite
device

...

FIG. 11

## INTERNATIONAL SEARCH REPORT

| International application No. |
|---|
| **PCT/CN2023/081339** |

### A. CLASSIFICATION OF SUBJECT MATTER

G02B27/09(2006.01)i; H01Q19/06(2006.01)i; H04B10/118(2013.01)i

According to International Patent Classification (IPC) or to both national classification and IPC

### B. FIELDS SEARCHED

Minimum documentation searched (classification system followed by classification symbols)

IPC: G02B H01Q H04B

Documentation searched other than minimum documentation to the extent that such documents are included in the fields searched

Electronic data base consulted during the international search (name of data base and, where practicable, search terms used)

CNABS; CNTXT; CNKI; VEN; WPABS; WOTXT; USTXT; EPTXT: 天线, 光信号, 跟踪, 瞄准, 角锥, 锥角, 锥形, 锥状, 棱锥, 透镜, 高斯, 环状, 环形, 主镜, 次镜, 主反射, 次反射, 反射, 镜, ATP, antenna?, signal, track+, pyramid+, conical, lens, prism, primary, secondary, reflect+, mirror

### C. DOCUMENTS CONSIDERED TO BE RELEVANT

| Category* | Citation of document, with indication, where appropriate, of the relevant passages | Relevant to claim No. |
|---|---|---|
| Y | CN 103309044 A (HARBIN INSTITUTE OF TECHNOLOGY) 18 September 2013 (2013-09-18)<br>description, paragraphs [0041]-[0068], and figures 1 and 5-11 | 1-18 |
| Y | CN 114326135 A (INSTITUTE OF OPTICS AND ELECTRONICS, CHINESE ACADEMY OF SCIENCES) 12 April 2022 (2022-04-12)<br>description, paragraphs [0026]-[0033], and figures 1-4 | 1-18 |
| A | CN 105629449 A (UNIVERSITY OF ELECTRONIC SCIENCE AND TECHNOLOGY OF CHINA) 01 June 2016 (2016-06-01)<br>entire document | 1-18 |
| A | CN 104104435 A (BEIJING UCAS TECHNOLOGY CO., LTD.) 15 October 2014 (2014-10-15)<br>entire document | 1-18 |
| A | CN 111552087 A (HARBIN INSTITUTE OF TECHNOLOGY) 18 August 2020 (2020-08-18)<br>entire document | 1-18 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **05 June 2023** | **19 June 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/081339**

**C.    DOCUMENTS CONSIDERED TO BE RELEVANT**

| Category* | Citation of document, with indication, where appropriate, of the relevant passages | Relevant to claim No. |
|---|---|---|
| A | CN 113253470 A (JI HUA LABORATORY) 13 August 2021 (2021-08-13)<br>entire document | 1-18 |
| A | US 2021098973 A1 (ZHEJIANG UNIVERSITY) 01 April 2021 (2021-04-01)<br>entire document | 1-18 |

Form PCT/ISA/210 (second sheet) (July 2022)

INTERNATIONAL SEARCH REPORT
Information on patent family members

International application No.

**PCT/CN2023/081339**

| Patent document cited in search report | | | Publication date (day/month/year) | Patent family member(s) | | | Publication date (day/month/year) |
|---|---|---|---|---|---|---|---|
| CN | 103309044 | A | 18 September 2013 | CN | 103309044 | B | 04 February 2015 |
| CN | 114326135 | A | 12 April 2022 | | None | | |
| CN | 105629449 | A | 01 June 2016 | | None | | |
| CN | 104104435 | A | 15 October 2014 | | None | | |
| CN | 111552087 | A | 18 August 2020 | | None | | |
| CN | 113253470 | A | 13 August 2021 | | None | | |
| US | 2021098973 | A1 | 01 April 2021 | US | 11418012 | B2 | 16 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210616022